# EUROPÄISCHE PATENTSCHRIFT

(11) **EP 0 362 703 B1**
(45) Veröffentlichungstag und Bekanntmachung des Hinweises auf die Patenterteilung: **07.12.1994**
(21) Anmeldenummer: 89117997.0
(22) Anmeldetag: 28.09.1989
(51) Int. Cl.: C09B 67/20, C09B 48/00, C09B 67/00, G03G 9/09

(54) **Chinacridone mit gezielt eingestellten triboelektrischen Effekten**
Chinaoridone with selectively imparted triboelectric effects
Quinaoridones ayant des effets triboélectriques sélectivement déterminés

(30) Priorität: 01.10.1988 DE 3833422
(43) Veröffentlichungstag der Anmeldung: 11.04.1990
(73) Patentinhaber: HOECHST AKTIENGESELLSCHAFT, 65926 Frankfurt am Main (DE)
(72) Erfinder: Macholdt, Hans-Tobias,Dr., D-6100 Darmstadt (DE); Kroh, Adolf, D-6251 Selters (DE); Sieber, Alexander, Dr., D-6230 Frankfurt am Main 80 (DE); Dietz, Erwin, Dr., D-6233 Kelkheim(Taunus) (DE)

(56) Entgegenhaltungen:
- EP-A- 0 009 720
- EP-A- 0 034 725
- EP-A- 0 247 576
- FR-A- 2 022 423
- GB-A- 2 071 683

## Beschreibung

Die vorliegende Erfindung betrifft Chinacridone, insbesondere Chinacridone auf Basis von C.I. Pigment Red 122, C.I. Pigment Violet 19 und C.I. Pigment Red 209, sowie Chinacridone und Chinacridon-Mischkristalle auf Basis von 2,9-Dimethylchinacridon mit gezielt eingestellten triboelektrischen Effekten sowie deren Verwendung als Farbmittel in elektrophotographischen Tonern und Entwicklern.

Bei elektrophotographischen Aufzeichnungsverfahren wird beispielsweise auf einer Photoleitertrommel ein "latentes Ladungsbild" erzeugt. Dies erfolgt beispielsweise durch Aufladung der Photoleitertrommel durch eine Corona-Entladung und anschließende bildmäßige Belichtung der elektrostatisch aufgeladenen Oberfläche der Photoleitertrommel, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt.

In einem darauffolgenden Schritt wird der Toner vom Photoleiter auf beispielsweise Papier, Textilien, Folien oder Kunststoff übertragen und dort beispielsweise durch Druck, Strahlung, Hitze oder Lösungsmitteleinwirkung fixiert. Der benutzte Photoleiter wird anschließend gereinigt und steht für einen neuen Aufzeichnungsvorgang zur Verfügung.

Bei elektrophotographischen Aufzeichnungsverfahren ist zusätzlich zur richtigen Farbnuance des Toners (der Toner ist die das Farbmittel enthaltende, im Aufzeichnungsverfahren farbgebende Komponente) dessen triboelektrische Aufladbarkeit unabdingbar, wobei das Vorzeichen und die Höhe der Aufladbarkeit von grundsätzlicher Bedeutung sind.

Ein Maß für die Tonerqualität ist seine spezifische Aufladbarkeit Q/M (Ladung pro Masseeinheit). Neben Vorzeichen und Höhe der Toneraufladung ist vor allem das Aufladungsprofil in Abhängigkeit von der Aktivierdauer besonders geeignet zur exakten Beschreibung des triboelektrischen Verhaltens eines Toners bzw. Entwicklers.

Die Farbnuance von Tonern für einfarbige Aufzeichnungen wird im wesentlichen von ästhetischen Gesichtspunkten bestimmt; für die Mehrfarbwiedergabe nach dem Prinzip der "subtraktiven Farbmischung" sind Transparenz und Farbort entscheidend.

Aufbauend auf dem Prinzip der "subtraktiven Farbmischung" kann mit Hilfe der drei Primärfarben Gelb, Cyan, Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Farbtonern für die Mehrfarbwiedergabe müssen die drei Toner Gelb, Cyan und Magenta neben den genau definierten farblichen Anforderungen auch hinsichtlich ihrer triboelektrischen Eigenschaften exakt aufeinander abgestimmt sein. Die triboelektrische Abstimmung ist erforderlich, da beim Vollfarbdruck bzw. bei der Vollfarbkopie aufeinanderfolgend die drei Farbtoner (bzw. vier, wenn Schwarz mit einbezogen wird) im selben Gerät übertragen werden müssen. Besitzen nun die Farbpigmente Gelb, Cyan und Magenta unterschiedliche tribolelektrische Effekte auf die Toneraufladbarkeit, so ist es nicht möglich, sie in eine einmal erstellte farblose Tonerbasisrezeptur lediglich als Farbmittel hinzuzufügen ohne die triboelektrischen Eigenschaften wesentlich zu verändern. Vielmehr kann es dann notwendig werden, für jedes Farbmittel eine eigene Rezeptur zu entwickeln, in der z.B. Art und Menge des benötigten Ladungssteuermittels bis hin zum Carriermaterial speziell zugeschnitten sein müssen.

Dieses Vorgehen ist entsprechend aufwendig und kommt dann bei Farbtonern für Prozessfarbe noch zusätzlich zu den bereits vorher beschriebenen Schwierigkeiten dazu.

Die grundsätzliche Eignung von 2,9-Dimethylchinacridon (C.I. Pigment Red 122) als Magentafarbmittel für elektrophotographische Aufzeichnungsverfahren wird beispielsweise in den US-PS 4 057 426, 3 804 619 und 3 909 259 beschrieben, wonach das 2,9-Dimethylchinacridon hinsichtlich seiner Farbnuance und seiner Transparenz sehr gut geeignet sei. Hinsichtlich der triboelektrischen Aufladbarkeit des Toners bestehen beim 2,9-Dimethylchinacridon jedoch gewisse Mängel. So wird beispielsweise in der US-PS 4 057 426 beschrieben, wie durch Verwendung eines aufwendigen Carriers, bestehend aus polymerbeschichteten Stahlteilchen, wobei im Polymer wiederum ein bestimmter Anteil Kupfer-tetra-4-(octadecyl-sulfonamido)phthalocyanin enthalten sein muß, die Aufladbarkeit des Toners verbessert werden muß.

Gleichzeitig wird in der genannten Patentschrift noch einmal darauf verwiesen, daß Magentatoner (die 2,9-Dimethylchinacridon als Farbmittel enthalten) bisher nur mit einem "Nickelberry"-Carrier (Nickelteilchen mit einer speziellen knotenförmigen Oberfläche) erfolgreich eingesetzt werden konnten (US-PS 3 909 259 und 3 804 619), weil nur durch eine besondere Kombination von Carrier und Toner eine einwandfreie Tonerübertragung erreicht werden konnte.

Da für die drei Tonerfarben durch die Verwendung eines speziellen Nickel-Carriers für den Magentatoner kein einheitlicher Carrier zur Verfügung steht, wird der Aufzeichnungsprozeß um einen weiteren Parameter komplexer, zumal die Verwendung von Nickel wegen seiner toxikologischen Bedenklichkeit schon von sich aus problematisch ist.

Darüberhinaus ist auch die Eignung von Mischkristallen aus Chinacridonen als Magentafarbmittel für elektrophotographische Toner und Entwickler bekannt. So wird in der DE-OS 3 618 214 A1 die Verwendung von Mischkristallen, bestehend aus 95 bis 60 Teilen einer Verbindung der nachstehenden Formel (A) und 5 bis 40 Teilen einer Verbindung der nachstehenden Formel (B) 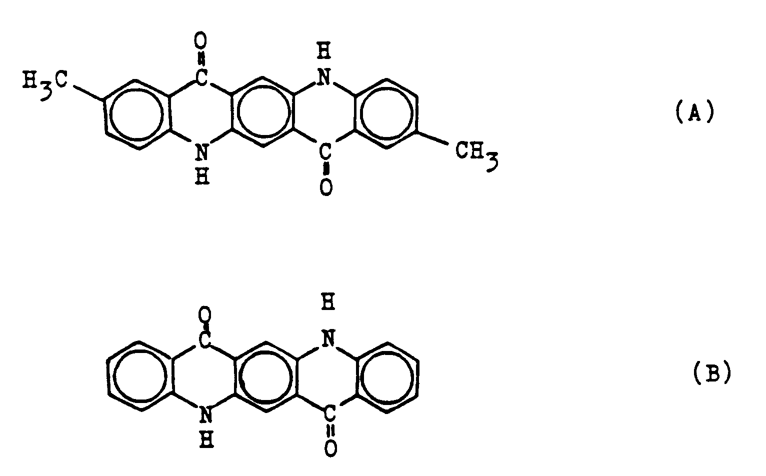
wobei die beschriebenen Mischkristalle einen deutlich höheren negativen triboelektrischen Effekt aufweisen als das reine 2,9-Dimethylchinacridon, beschrieben.

Auf alle bisher beschriebene Magentapigmente auf Chinacridonbasis trifft zu, daß sie einen sehr ausgeprägten Effekt auf die triboelektrische Aufladung von Tonern und Entwicklern aufweisen. Grundsätzlich kann dieses Problem zwar durch Zugabe von farblosen Ladungssteuermitteln gelöst werden, welche die jeweils gewünschte Toneraufladung einstellen (US-PS 4 324 851, EP 0 161 128), was aber zu neuen Schwierigkeiten führen kann.

Neben dem bereits weiter oben erwähnten Aufwand, für jede Tonerfarbe eine eigene Rezeptur entwickeln zu müssen, müssen vor allem die Verträglichkeit des Ladungssteuermittels mit den übrigen Tonerinhaltsstoffen, die Gleichverteilung im Toner sowie die Temperatur- und Migrationsbeständigkeit gewahrleistet sein. Zudem ist die Zugabe von Ladungssteuermitteln ein weiterer Arbeitsschritt, der entsprechende Kosten verursacht.

Der vorliegenden Erfindung lag daher das Bedürfnis zu Grunde, Chinacridonpigmente, vor allem magentafarbene Chinacridonpigmente, mit gezielt eingestellten triboelektrischen Effekten zu finden, wobei die coloristischen Eigenschaften und die Echtheitseigenschaften des jeweiligen Pigmentes unbeeinflußt bleiben mußten und darüberhinaus die üblicherweise bei der Synthese oder der Nachbehandlung gegebenen Möglichkeiten des Einflusses auf Coloristik und Echtheiten des Pigmentes nicht gemindert werden durften.

Insbesondere bestand das Bedürfnis, das jeweilige Pigment triboelektrisch neutralisieren zu können. Unter "triboelektrisch neutralem Verhalten" versteht man, daß das Pigment in dem jeweiligen Toner oder Entwickler keinen Einfluß auf deren Aufladbarkeit ausübt. Dies bedeutet wiederum, daß die Einstellung des triboelektrischen Effektes eines Pigmentes in kleinsten Schritten möglich sein muß, um ihn so optimal in das jeweilige System einzupassen. Außer für die Verwendung in elektrophotographischen Tonern und Entwicklern ist die Beeinflussung des triboelektrischen Effektes von Pigmenten auch für deren Einsatz in elektrokinetisch versprühten Pulvern und Lacken von Interesse, da Pigmente einen maßgeblichen Einfluß auch auf die Aufladbarkeit von Pulvern haben können (DE-OS 3 737 495).

Überraschenderweise wurde nun gefunden, daß die triboelektrischen Effekte von Chinacridonpigmenten gezielt eingestellt werden können, indem man diesen Pigmenten bestimmte, triboelektrisch aktive Verbindungen der allgemeinen Formel I

Q ⁅ A - Y]ₙ (I),

einzeln oder in Kombination zusetzt, wobei in Formel I Q einen nicht-substituierten oder einen durch Halogenatome, wie beispielsweise Fluor- oder Chloratome,
Alkyl(C₁-C₆)-, Alkoxy(C₁-C₆)-, H₂N-CO-, Alkyl(C₁-C₈)-NH-CO-
oder 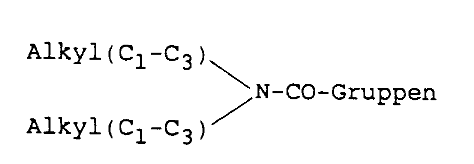
substituierten Chinacridonrest darstellt, A eine direkte Bindung oder ein Brückenglied aus der Reihe -O-, -S-, -NR¹-, -CO-, -SO₂-, -CR²R³-, Arylen, beispielsweise Phenylen, sowie chemisch sinnvoller Kombinationen dieser Brückenglieder bedeutet, und Y eine -NR⁴R⁵-Gruppe oder einen fünf-, sechs- oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄)-, Alkoxy(C₁-C₆)-, Hydroxyphenyl, Halogen, beispielsweise ein Fluor-, Chlor- oder Bromatom, -CN, Carboxyl, -CO-NRR', -SO₂-NRR', gesättigtes oder ungesättigtes Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen und R¹ bis R⁵ unabhängig voneinander je ein Wasserstoffatom und/oder eine Alkyl- oder Alkenylgruppe von 1 bis 22 Kohlenstoffatomen bedeuten und n eine Zahl von 1 bis 4 darstellt. Im eingestellten Chinacridonpigment ist die triboelektrisch aktive Verbindung zweckmäßigerweise in einer Menge von etwa 0,05 bis etwa 30 Gewichtsprozent enthalten. Sie kann aber auch höherprozentig, im Grenzfall 100 %ig, d.h., ohne ein gesondertes Pigment, zugegen sein.

Bevorzugte triboelektrisch wirksame Verbindungen der vorstehend genannten allgemeinen Formel I sind solche, bei denen Q einen nichtsubstituierten oder einen durch Alkyl(C₁-C₆)-Gruppen oder Chloratome substituierten Chinacridonrest darstellt, A -CH₂-, -NR⁶-, -SO₂-, -CO-, CR⁷R⁸ oder chemisch sinnvolle Kombinationen davon bedeutet, und Y eine -NR⁹R¹⁰ Gruppe oder einen fünf-, sechs- oder siebengliedrigen stickstoffhaltigen Heterocyclus darstellt, wobei R⁹ bis R¹⁰ Alkylgruppen von 1 bis 6 Kohlenstoffatomen bedeuten und n eine zahl von 1 bis 4 darstellt.

Besonders bevorzugte triboelektrisch wirksame Verbindungen der vorstehend genannten allgemeinen Formel I sind solche, bei denen Q einen nichtsubstituierten oder einen durch Alkyl(C₁-C₆)-Gruppen oder Chloratome substituierten Chinacridonrest darstellt, A die Gruppierung -CH₂-NH-CO-CH₂- bedeutet und Y eine -NR¹¹R¹²-Gruppe, wobei R¹¹ und R¹² eine Alkyl(C₁-C₆)-Gruppe bedeutet, darstellt und n eine Zahl von 1 bis 4 bedeutet und ferner solche, bei denen Q einen nichtsubstituierten oder einen durch Alkyl(C₁-C₆)-Gruppen oder Chloratome substituierten Chinacridonrest bedeutet, A eine Gruppierung der Formel -SO₂-NH-(CH₂)ₓ- oder -CO-NH-(CH₂)ₓ-, worin x eine Zahl von 1 bis 22 darstellt, bedeutet, und Y eine NR¹³R¹⁴-Gruppe, worin R¹³ und R¹⁴ eine Alkyl(C₁-C₆)-Gruppe bedeutet, darstellt und n eine Zahl von 1 bis 4 bedeutet, und außerdem solche, bei denen Q einen nichtsubstituierten oder einen durch Alkyl(C₁-C₆)-Gruppen oder Chloratome substituierten Chinacridonrest, A die Gruppe -CH₂-, Y einen fünf-, sechs- oder siebengliedrigen stickstofhaltigen Heterocyclus und n eine Zahl von 1 bis 4 bedeuten.

An triboelektrisch besonders wirksamen Verbindungen seien schließlich noch die der Formeln

Q ⁅ SO₂-NH-CH₂-CH₂-CH₂-N(C₂H₅)₂ ] ₁₋₂

und 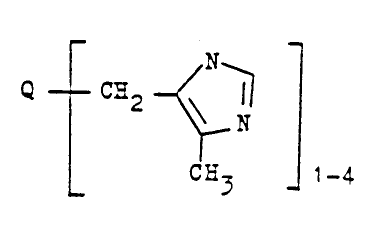
worin Q jeweils einen nichtsubstituierten Chinacridonrest bedeutet, genannt.

Bei den Chinacridonpigmenten kann es sich um substituierte oder unsubstituierte Chinacridone, wie z.B. C.I. Pigment Red 122 und 209 oder C.I. Pigment Violet 19, sowie um Mischkristallpigmente, z.B. auf Basis 2,9-Dimethylchinacridon/Chinacridon, wie in DE-OS 3 618 214 A1 beschrieben, handeln. Die erfindungsgemäß beanspruchten, triboelektrisch gezielt beeinflußten Pigmente enthalten die triboelektrisch aktive Verbindung typischerweise in einer Konzentration zwischen etwa 0,05 und etwa 30 Gewichtsprozent, bevorzugt 1 bis 10 Gewichtsprozent, wobei die Zugabe der Verbindung (Additivs) zum Pigment z.B. bei dessen Nachbehandlung geschehen kann.

Der Zusatz von Verbindungen auf Chinacridonbasis zu Chinacridonpigmenten ist grundsätzlich bekannt. So wird beispielsweise in DE 3 106 906 A1 beschrieben, daß durch den Zusatz solcher Verbindungen zu den Pigmenten die Dispersionsstabilität von Offset- und anderen Druckfarben erhöht wird.

In DE-A-3 106 906 (GB-A-2 071 683) sind Chinacridone offenbart, die ein bis vier Gruppen der Formel -SO₂-NR¹-(CH₂)_{z}- oder -CO-NR¹-(CH₂)_{z}- enthalten, worin z eine ganze Zahl von 1 bis 6 bedeutet. Diese Verbindungen sind daher als solche nicht Gegenstand der vorliegenden Erfindung.
Die in DE-A-3 106 906 beschriebenen Chinacridone werden als Dispergiermittel in Pigmentpräparationen eingesetzt, die für den Offsetdruck, Tiefdruck oder in Anstrichfarben verwendet werden.

In EP-A-0 009 720 werden Gemische von linearen trans-Chinacridonen beschrieben, die mindestens eine Komponente aus der Reihe unsubstituierter, Chlor- oder Methyl-substituierter Chinacridone und mindestens eine Komponente aus der Reihe der Bis-carbamoyl-chinacridone, wobei die Carbamoylgruppe unsubstituiert, mono- oder dialkyliert ist, enthalten. Diese Chinacridongemische werden als Pigmente für den Einsatz im Automobilsektor und ähnlichen Anwendungsgebieten, in denen Pigmente mit hoher Transparenz gefordert werden, benutzt. Die genannten Bis-carbamoylchinacridone sind daher als solche nicht Gegenstand der vorliegenden Erfindung.

In EP-A-0 034 725 sind Imidazolylmethylgruppen enthaltene Farbstoffe offenbart, in denen der Farbstoff-Grundkörper auch ein Chinacridon sein kann. Diese Farbstoffe werden zum Färben von Cellulose enthaltenden Fasermaterialien, insbesondere Papier, verwendet. Chinacridone, die durch ein oder mehrere Imidazolylmethylgruppen substituiert sind, sind daher als solche nicht Gegenstand der vorliegenden Erfindung.

Neu und völlig überraschend ist aber, daß durch den Zusatz von speziellen, triboelektrisch aktiven Verbindungen auf Chinacridonbasis zu den Pigmenten der triboelektrische Effekt von Chinacridonpigmenten in Tonern und Entwicklern gezielt eingestellt (maßgeschneidert) werden kann. So ist es z.B. möglich, durch Variation der Konzentration des Additives den triboelektrischen Effekt der Pigmente in kleinsten Schritten zu variieren. Beispielsweise zeigt ein Testtoner, welcher 5 % eines 2,9-Dimethylchinacridons ohne triboelektrisch aktives Additiv enthält (Beispiel 4), eine Aufladung von -12 µC/g (30 min Aktivierdauer), bzw. -23 µC/g (2 Stunden Aktivierdauer) bzw. -31 µC/g (24 Stunden Aktivierdauer). Ein vergleichbarer Toner mit 5 % triboelektrisch aktiver Verbindung im Pigment (Beispiel 2) zeigt die Aufladung von -9 µC/g (30 min Aktivierdauer) bzw. -20 µC/g (2 Stunden Aktivierdauer) bzw. -21 µC/g (24 Stunden Aktivierdauer). Enthält das Pigment 10 % der triboelektrisch aktiven Verbindung (Beispiel 1), ist die Aufladung -3 µC/g (30 min Aktivierdauer) bzw. -3 µC/g (2 Stunden Aktivierdauer) bzw. -2 µC/g (24 Stunden Aktivierdauer). Darüberhinaus können aber auch die triboelektrisch aktiven Verbindungen einzeln (vgl. Beispiel 13) oder in Kombination (vgl. Beispiel 12) mit Farbmitteln, bevorzugt Magentafarbmitteln, insbesondere mit Chinacridon-Pigmenten, als Ladungssteuermittel in elektrophotographischen Tonern und Entwicklern eingesetzt werden.

Die triboelektrisch gezielt beeinflußten Pigmente werden in der Regel in einer Konzentration zwischen etwa 0,5 und etwa 15 %, bevorzugt etwa 3 bis etwa 8 %, in das jeweilige Trägermaterial homogen eingearbeitet, wobei im Falle der elektrophotographischen Toner und Entwickler beispielsweise Styrol-, Styrolacrylat-, Styrolbutadien-, Polyester- und Epoxidharze, und im Falle der elektrokinetisch versprühten Pulver Epoxid-, Polyester- und Acrylharze einzeln oder in Kombination typische Trägermaterialien sind, wobei die Trägermaterialien gegebenenfalls noch weitere Inhaltsstoffe wie z.B. Wachse, Ladungssteuermittel, spezielle Härterkomponenten oder Pigmente enthalten können bzw. nach der Pigmenteinarbeitung noch zugefügt bekommen.

Die erfindungsgemäß triboelektrisch gezielt beeinflußten Pigmente werden in an sich bekannter Weise in das Trägermaterial homogen eingearbeitet, beispielsweise durch Mischen und Extrudieren oder Einkneten. Die Pigmente können entweder als getrocknetes und gemahlenes Pulver oder als Dispersion oder als Preßkuchen oder als Masterbatch oder in sonstiger geeigneter Form zugegeben werden. Ebenso können die Pigmente auch grundsätzlich schon bei der Herstellung der jeweiligen Trägermaterialien (Harze) zugegeben werden, d.h. im Verlauf ihrer Polymerisation oder Polykondensation.

Die Höhe der elektrostatischen Aufladung der elektrophotographischen Toner, in welchen die erfindungsgemäß triboelektrisch gezielt beeinflußten Pigmente homogen eingearbeitet wurden, wurde an Standardsystemen unter gleichen Bedingungen (wie gleiche Dispergierzeiten, gleiche Teilchengrößenverteilung, gleiche Teilchenform) bei 23°C und 50 % relativer Luftfeuchtigkeit gemessen. Die Aktivierung des Toners in einem Zweikomponentenentwickler erfolgt durch Verwirbelung des Toners mit einem Carrier (3 Teile Toner auf 97 Teile Carrier) auf einer Rollbank (150 Umdrehungen pro Minute).

Bei der Bestimmung des Q/M-Wertes ist die Teilchengröße von großem Einfluß. Es wurde daher streng darauf geachtet, daß die bei den Sichtungen erhaltenen und in den nachstehenden Beispielen aufgeführten Tonerproben bezüglich der Teilchengrößenverteilung einheitlich waren. Die mittlere Teilchengröße lag bei 10 µm.

Die Herstellung der jeweiligen Chinacridonpigmente kann nach den bekannten Verfahren erfolgen.

Die Herstellung des gemäß verschiedenen Beispielen (siehe weiter unten) verwendeten triboelektrisch aktiven Additives (nachstehend "Additiv 1" genannt) der Formel 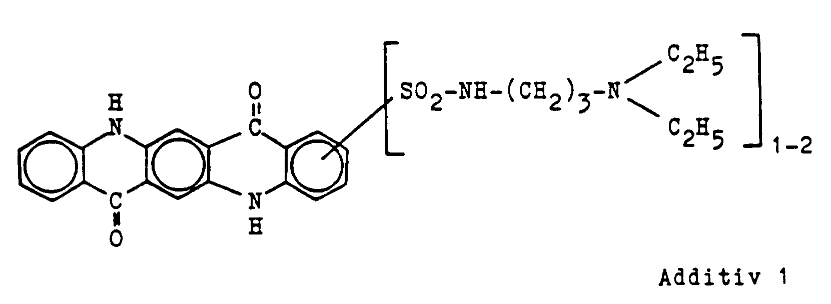
erfolgt in an sich bekannter Weise (DE-OS 31 06 906) durch Sulfochlorieren des unsubstituierten Chinacridons mit Thionylchlorid in Chlorsulfonsäure und anschließende Kondensierung des sulfochlorierten Produktes mit dem entsprechenden Amin.

Die Herstellung des in nachstehenden Beispielen verwendeten triboelektrisch aktiven Additivs (nachstehend "Additiv 2" genannt) der Formel 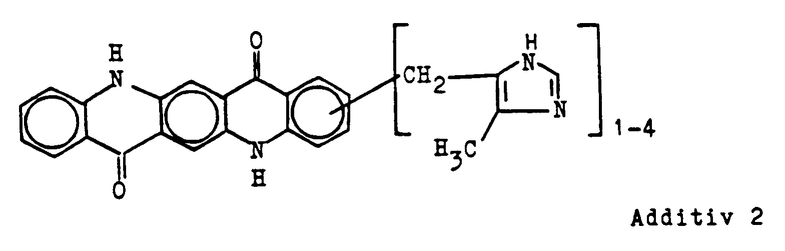
ist in der DE-OS 37 43 619, Beispiel 10, beschrieben.

Der Zusatz der speziellen triboelektrisch aktiven Verbindungen kann auf verschiedene Weise geschehen, beispielsweise bei einem beliebigen Syntheseschritt bei der Herstellung des Pigmentes, wie z.B. bei dem Finish (Nachbehandlung) des Pigmentes, wobei sich ein Finish mit oder ohne Verwendung von Lösungsmitteln und mit oder ohne Scherbeanspruchung des Pigmentes durchgeführt werden kann. Eine andere Möglichkeit des Zusatzes besteht im Zumischen der Verbindungen zum Pigmentpreßkuchen bzw. Pigmentpulver oder in der Zugabe von Pigment einerseits und den erfindungsgemäß beschriebenen, triboelektrisch aktiven Verbindungen, einzeln oder in Kombination, andererseits bei der Toner- bzw. Entwicklerherstellung.

Die nachstehenden Beispiele dienen zur Erläuterung der Erfindung, ohne sie darauf zu beschränken. Die angegebenen Teile bedeuten Gewichtsteile. Der Zusatz der Verbindungen zum Pigment bei dessen Finish erfolgte wie in der Patentanmeldung P 38 33 423.2 beschrieben.

### Beispiel 1

5 Teile C.I. Pigment Red 122 (2,9-Dimethylchinacridon) (^{(R)}Hostaperm-Rosa E), dem beim Finish 10 % des "Additives 1" zugesetzt wurden, wurden mittels eines Kneters der Fa. Werner & Pfleiderer (Stuttgart) 60 Minuten in 95 Teilen Tonerbindemittel (^{R}Dialec S 309 der Firma Diamond Shamrock (Styrol-Methacryl-Copolymer)) dispergiert. Anschließend wurde auf der Laboruniversalmühle 100 LU (Firma Alpine, Augsburg) gemahlen und dann auf dem Zentrifugalsichter 100 MZR (Firma Alpine) klassifiziert.

Die gewünschten Teilchenfraktion wurde mit einem Carrier aus mit Styrol-Methacryl-Copolymer 90:10 beschichteten Magnetit-Teilchen der Größe 50 bis 200 µm des Typs "90 µm Xerographic Carrier" der Firma Plasma Materials Inc. aktiviert.

Die Messung erfolgt an einem üblichen Q/M-Meßstand (vgl. hierzu J.H. Dessauer, H.E. Clark "Xerography and related Processes", Focal Press, N.Y. 1965, Seite 289); durch Verwenden eines Siebes mit einer Maschenweite von 25 µm (508 Mesh per inch), Fa. Gebrüder Kufferath, Düren, wurde sichergestellt, daß bei den Tonerausblasungen kein Carrier mitgerissen werden kann.

In Abhängigkeit von der Aktivierdauer wurden folgende Q/M-Werte [µC/g] bestimmt:

| **Aktivierdauer** | **[µC/g]** |
|---|---|
| 30 min | - 3 |
| 2 Std. | - 3 |
| 24 Std. | - 2 |

### Beispiel 2

5 Teile des in Beispiel 1 beschriebenen Pigmentes, dem beim Finish statt 10 % lediglich 5 % des Additives 1 zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 9 |
| 2 Std. | - 20 |
| 24 Std. | - 21 |

### Beispiel 3

5 Teile des in Beispiel 5 beschriebenen C.I. Pigment Red 122, dem beim Finish 5 % des "Additives 2" zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 11 |
| 2 Std. | - 18 |
| 24 Std. | - 25 |

### Beispiel 4 (Vergleichsbeispiel)

5 Teile C.I. Pigment Red 122 (^{(R)}Hostaperm-Rosa E) (2,9-Dimethylchinacridon) ohne Zusatz des Additives 1 bzw. 2 wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 12 |
| 2 Std. | - 23 |
| 24 Std. | - 31 |

### Beispiel 5

5 Teile eines Mischkristalles auf Basis von 2,9-Dimethylchinacridon (^{(R)}Hostaperm-Rosa E O2), dem beim Finish 10 % des Additives 1 zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 5 |
| 2 Std. | - 4 |
| 24 Std. | - 2 |

### Beispiel 6

5 Teile des in Beispiel 5 beschriebenen Pigmentes, dem beim Finish statt 10 % lediglich 2 % des Additives 1 zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 8 |
| 2 Std. | - 9 |
| 24 Std. | - 11 |

### Beispiel 7 (Vergleichsbeispiel)

5 Teile eines Mischkrietalles auf Basis von 2,9-Dimethylchinacridon (^{(R)}Hostaperm-Rosa E O2) ohne Zusatz des Additives 1 wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 21 |
| 2 Std. | - 29 |
| 24 Std. | - 38 |

### Beispiel 8

5 Teile C.I. Pigment Violet 19 (Hostaperm-Rot E5B O2) (Chinacridon), am Ende des Finish 5 % des Additives 1 zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 12 |
| 2 Std. | - 20 |
| 24 Std. | - 25 |

### Beispiel 9 (Vergleichsbeispiel)

5 Teile C.I. Pigment Violet 19 (^{(R)}Hostaperm-Rot E5B O2) (Chinacridon) ohne Zusatz des Additives 1 wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 15 |
| 2 Std. | - 23 |
| 24 Std. | - 27 |

### Beispiel 10

5 Teile C.I. Pigment Red 209 (^{(R)}Hostaperm-Rot EG) (Dichlorchinacridon), dem beim Finish 5 % des Additives 1 zugesetzt worden waren, wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 15 |
| 2 Std. | - 21 |
| 24 Std. | - 22 |

### Beispiel 11 (Vergleichsbeispiel)

5 Teile C.I. Pigment Red 209 (^{(R)}Hostaperm-Rot EG) (Dichlorchinacridon) ohne Zusatz des Additives 1 wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 16 |
| 2 Std. | - 22 |
| 24 Std. | - 24 |

### Beispiel 12

5 Teile des in Beispiel 4 beschriebenen Pigmentes und 1 Teil des Additive 1 wurden, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | - 7 |
| 2 Std. | - 11 |
| 24 Std. | - 13 |

### Beispiel 13

1 Teil des Additives 1 wurde, wie in Beispiel 1 beschrieben, in einen Toner homogen eingearbeitet. In Abhängigkeit von der Aktivierdauer wurden folgende Q/M-Werte [µC/g] gemessen:

| **Aktivierdauer** | **[µC/g]** |
|---|---|
| 30 min | + 1 |
| 2 Std. | - 6 |
| 24 Std. | - 13 |

## Patentansprüche

1. Chinacridone mit gezielt eingestellten triboelektrischen Effekten, gekennzeichnet durch einen Gehalt von etwa 0,05 % bis 100 Gew.-% an triboelektrisch aktiven Verbindungen der allgemeinen Formel (I)
Q-[A-Y]ₙ (I),
einzeln oder in Kombination, wobei in Formel (I) Q einen nicht-substituierten oder einen durch Halogenatome, Alkyl(C₁-C₆)-, Alkoxy(C₁-C₆)-, H₂N-CO-,
Alkyl(C₁-C₈)NH-CO-
oder 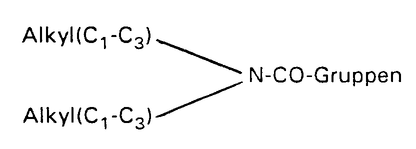 substituierten Chinacridonrest darstellt, A eine direkte Bindung oder ein Brückenglied aus der Reihe -O-, -S-, -NR¹-, -CO-, -SO₂-, -CR²R³-, Arylen oder chemisch sinnvoller Kombinationen dieser Brückenglieder bedeutet, und Y eine -NR⁴R⁵-Gruppe oder einen fünf-, sechs- oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄), Alkoxy(C₁-C₆), Hydroxyphenyl, Halogenatome, -CN, -COOH, -CO-NRR', -SO₂-NRR', Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen darstellen und R¹ bis R⁵ unabhängig voneinander je ein Wasserstoffatom und/oder eine Alkyl- oder Alkenylgruppe von 1 bis 22 Kohlenstoffatomen bedeuten, und n eine Zahl von 1 bis 4 darstellt, wobei solche Verbindungen der Formel (I) ausgenommen sind, in denen
a) A eine -CO-Gruppe und Y eine -NR⁴R⁵-Gruppe sind oder
b) A eine Gruppe der Formel -SO₂-NR¹-(CH₂)_{z}- oder -CO-NR¹-(CH₂)_{z}, wobei z eine ganze Zahl von 1 bis 6 bedeutet, oder
c) A eine -CH₂-Gruppe und Y ein substituierter oder unsubstituierter Imidazolylrest sind.

2. Chinacridone mit gezielt eingestellten triboelektrischen Effekten gemäß Anspruch 1, dadurch gekennzeichnet, daß in der triboelektrisch aktiven Verbindung der allgemeinen Formel (I) Q einen nichtsubstituierten oder einen durch Alkyl(C₁-C₆)-Gruppen oder Chloratome substituierten Chinacridonrest darstellt, A -CH₂-, -NR⁶-, -SO₂-, -CO-, -CR⁷R⁸ oder chemisch sinnvolle Kombinationen bedeutet, Y eine -NR⁹R¹⁰ Gruppe oder einen fünf-, sechs- oder siebengliedrigen stickstoffhaltigen Heterocyclus darstellt, wobei R⁶ bis R¹⁰ Alkylgruppen von 1 bis 6 Kohlenstoffatomen bedeuten, und n eine Zahl von 1 bis 4 darstellt.

3. Chinacridone mit gezielt eingestellten triboelektrischen Effekten gemäß Anspruch 1, dadurch gekennzeichnet, daß in der triboelektrisch aktiven Verbindung der allgemeinen Formel (I) Q einen nichtsubstituierten Chinacridonrest darstellt, A die Gruppierungen -CH₂-NH-CO-CH₂- und Y die Gruppe -NR¹¹R¹² bedeuten, wobei R¹¹ und R¹² Alkylgruppen von 1 bis 6 Kohlenstoffatomen darstellen, und n eine Zahl von 1 bis 4 bedeutet.

4. Chinacridone mit gezielt eingestellten triboelektrischen Effekten gemäß Anspruch 1, dadurch gekennzeichnet, daß in der triboelektrisch aktiven Verbindung der allgemeinen Formel (I) Q einen nichtsubstituierten oder durch Alkyl(C₁-C₆)-Gruppen oder Chloratome substituierten Chinacridonrest darstellt, A die Gruppe -CH₂- bedeutet, Y einen fünf-, sechs- oder siebengliedrigen stickstoffhaltigen Heterocyclus darstellt, und n eine Zahl von 1 bis 4 bedeutet.

5. Chinacridone mit gezielt eingestellten triboelektrischen Effekten nach mindestens einem der Ansprüche 1 und 2, dadurch gekennzeichnet, daß das Pigment, dem die triboelektrisch aktiven Verbindung zugesetzt wird, ein Chinacridonpigment auf Basis von C.I. Pigment Red 122, C.I. Pigment Red 209 oder C.I. Pigment Violet 19 oder ein Chinacridonmischkristall ist.

6. Chinacridonpigmente mit gezielt eingestellten triboelektrischen Effekten, gekennzeichnet durch einen Gehalt von 0,05 bis 30 Gew.-% der in einem oder mehreren der Ansprüche 1 bis 5 genannten triboelektrisch aktiven Verbindungen der allgemeinen Formel (I).

7. Chinacridonpigmente mit gezielt eingestellten triboelektrischen Effekten, dadurch gekennzeichnet, daß das Pigment, dem die triboelektrisch aktive Verbindung nach Anspruch 1 zugesetzt wird, ein Chinacridon-Mischkristall, bestehend aus 95 bis 60 Teilen des Chinacridons der nachstehenden Formel A und 5 bis 40 Teilen des Chinacridons der nachstehenden Formel B 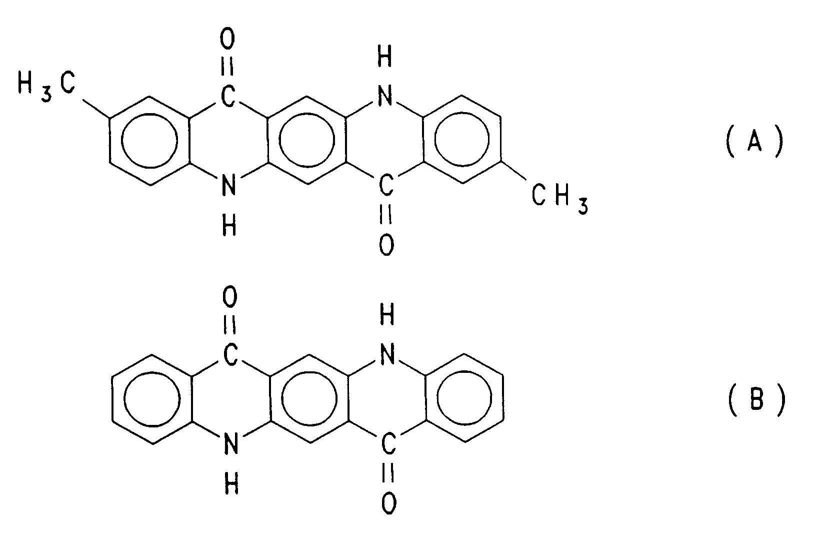 ist.

8. Verfahren zur Herstellung der Chinacridonpigmente mit gezielt eingestellten triboelektrischen Effekten nach Anspruch 6 oder 7, dadurch gekennzeichnet, daß man die triboelektrisch aktive Verbindung bei einem beliebigen Schritt der Pigmentsynthese oder bei der Pigmentnachbehandlung zum Pigmentpreßkuchen oder zum Pigmentpulver zusetzt.

9. Verwendung von Chinacridonpigmenten zur Herstellung von triboelektrisch gezielt eingestellten Tonern oder Entwicklern, die zum
elektrophotographischen Kopieren oder Vervielfältigen von Vorlagen sowie zum Drucken von elektronisch, optisch oder magnetisch gespeicherten Informationen oder im Colorproofing eingesetzt werden, dadurch gekennzeichnet, daß die Chinacridonpigmente einen Gehalt von 0,05 bis 30 Gew.-% an triboelektrisch aktiven Verbindungen der allgemeinen Formel (I)
Q-[A-Y]ₙ (I),
einzeln oder in Kombination haben, wobei in Formel (I) Q einen nicht-substituierten oder einen durch Halogenatome, Alkyl(C₁-C₆)-, Alkoxy(C₁-C₆)-, H₂N-CO-,
Alkyl(C₁-C₈)NH-CO-
oder 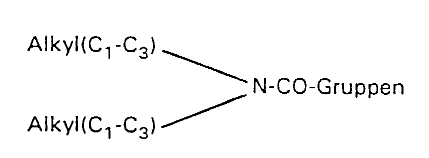 substituierten Chinacridonrest darstellt, A eine direkte Bindung oder ein Brückenglied aus der Reihe -O-, -S-, -NR¹-, -CO-, -SO₂-, -CR²R³-, Arylen oder chemisch sinnvoller Kombinationen dieser Brückenglieder bedeutet, und Y eine -NR⁴R⁵-Gruppe oder einen fünf-, sechs- oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄), Alkoxy(C₁-C₆), Hydroxyphenyl, Halogenatome, -CN, -COOH, -CO-NRR', -SO₂-NRR', Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen darstellen und R¹ bis R⁵ unabhängig voneinander je ein Wasserstoffatom und/oder eine Alkyl- oder Alkenylgruppe von 1 bis 22 Kohlenstoffatomen bedeuten, und n eine Zahl von 1 bis 4 darstellt.

10. Verwendung nach Anspruch 9, dadurch gekennzeichnet, daß in der triboelektrisch aktiven Verbindung der allgemeinen Formel (I) Q einen nichtsubstituierten oder einen durch Alkyl(C₁-C₆)-Gruppen oder Chloratome substituierten Chinacridonrest darstellt, A -CH₂-, -NR⁶-, -SO₂-, -CO-, -CR⁷R⁸ oder chemisch sinnvolle Kombinationen bedeutet, Y eine -NR⁹R¹⁰ Gruppe oder einen fünf-, sechs- oder siebengliedrigen stickstoffhaltigen Heterocyclus darstellt, wobei R⁶ bis R¹⁰ Alkylgruppen von 1 bis 6 Kohlenstoffatomen bedeuten, und n eine Zahl von 1 bis 4 darstellt.

11. Verwendung nach Anspruch 9, dadurch gekennzeichnet, daß in der triboelektrisch aktiven Verbindung der allgemeinen Formel (I) Q einen nichtsubstituierten Chinacridonrest darstellt, A die Gruppierungen -CH₂-NH-CO-CH₂- und Y die Gruppe -NR¹¹R¹² bedeuten, wobei R¹¹ und R¹² Alkylgruppen von 1 bis 6 Kohlenstoffatomen darstellen, und n eine Zahl von 1 bis 4 bedeutet.

12. Verwendung nach Anspruch 9, dadurch gekennzeichnet, daß in der triboelektrisch aktiven Verbindung der allgemeinen Formel (I) Q einen nichtsubstituierten oder durch Alkyl(C₁-C₆)-Gruppen oder Chloratome substituierten Chinacridonrest darstellt, A eine Gruppierung der Formel -SO₂-NH-(CH₂)ₓ- oder -CO-NH-(CH₂)ₓ, worin x eine Zahl von 1 bis 22 bedeutet, darstellt, und Y die Gruppe -NR¹³R¹⁴ bedeuten, wobei R¹³ und R¹⁴ Alkylgruppen von 1 bis 6 Kohlenstoffatomen darstellen, und n eine Zahl von 1 bis 4 bedeutet.

13. Verwendung nach Anspruch 9, dadurch gekennzeichnet, daß in der triboelektrischen aktiven Verbindung der allgemeinen Formel (I) Q einen nichtsubstituierten oder durch Alkyl(C₁-C₆)-Gruppen oder Chloratome substituierten Chinacridonrest darstellt, A die Gruppe -CH₂- bedeutet, Y einen fünf-, sechs- oder siebengliedrigen stickstoffhaltigen Heterocyclus darstellt, und n eine Zahl von 1 bis 4 bedeutet.

14. Verwendung nach Anspruch 9, dadurch gekennzeichnet, daß eine triboelektrisch aktive Verbindung der Formel 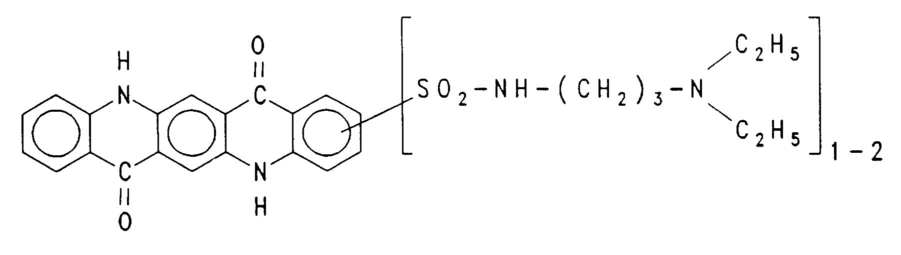 enthalten ist.

15. Verwendung nach Anspruch 9, dadurch gekennzeichnet, daß eine triboelektrisch aktive Verbindung der Formel 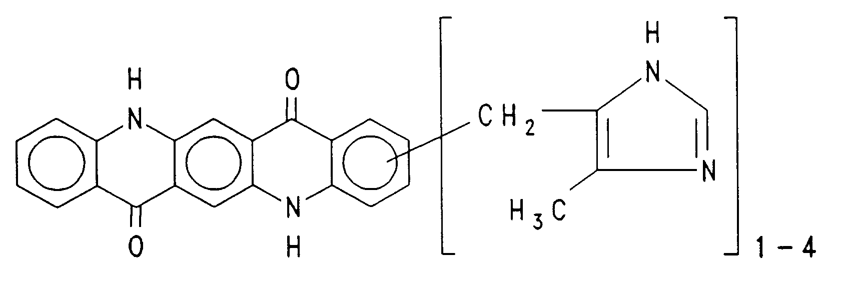 enthalten ist.

16. Verwendung von Tonern oder Entwicklern, die unter Verwendung der in einem oder mehreren der Ansprüche 9 bis 15 genannten Chinacridonpigmente mit gezielt eingestellten triboelektrischen Effekten hergestellt wurden, zur Magentawiedergabe bei der elektrophotographischen Mehrfarbaufzeichnung.

17. Verwendung von in einem oder mehreren der Ansprüche 9 bis 15 genannten triboelektrisch aktiven Verbindungen als Farb- und Ladungssteuermittel, allein oder in Kombination mit Pigmenten, bevorzugt Chinacridonpigmenten, in elektrophotographischen Tonern und Entwicklern.

## Claims

1. A quinacridone having selectively adjusted triboelectric effects which contains about 0.05 % to 100 % by weight of triboelectrically active compounds of the formula I
Q ⁅ A - Y]ₙ (I),
individually or in combination, in which Q in formula (I) is a quinacridone radical which is unsubstituted or substituted by halogen atoms, alkyl(C₁-C₆), alkoxy(C₁-C₆), H₂N-CO-, alkyl(C₁-C₈)-NH-CO- or 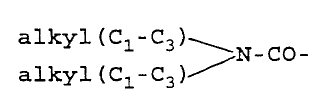 groups, A is a direct bond or a bridge member from the series comprising -O-, -S-, -NR¹-, -CO-, -SO₂-, -CR²R³-, arylene or chemically reasonable combinations of these bridge members, and Y is an -NR⁴R⁵ group or a five-, six-or seven-membered heterocycle which contains one to three heteroatoms from the series comprising nitrogen and/or oxygen and/or sulfur and which can be substituted by alkyl(C₁-C₄), alkoxy(C₁-C₆), hydroxyphenyl, halogen atoms, -CN, -COOH, -CO-NRR', -SO₂-NRR', hydroxyalkyl or alkylaminoalkyl, in which R and R' together with the nitrogen atom can be an aliphatic or aromatic heterocycle, R and R' are hydrogen atoms or alkyl(C₁-C₄) groups and R¹ to R⁵, independently of one another, are each a hydrogen atom and/or an alkyl or alkenyl group of 1 to 22 carbon atoms and n is a number from 1 to 4, excluding compounds of the formula (I) in which
a) A is a -CO- group and Y is an -NR⁴R⁵ group, or
b) A is a group of the formula -SO₂-NR¹-(CH₂)_{z}- or -CO-NR¹-(CH₂)_{z} in which z is an integer from 1 to 6, or
c) A is a -CH₂- group and Y is a substituted or unsubstituted imidazolyl radical.

2. A quinacridone having selectively adjusted triboelectric effects as claimed in claim 1, wherein Q, in the triboelectrically active compound of the formula (I), is a quinacridone radical which is unsubstituted or substituted by alkyl(C₁-C₆) groups or chlorine atoms, A is -CH₂-, -NR⁶-, -SO₂-, -CO-, -CR⁷R⁸ or chemically reasonable combinations, Y is an -NR⁹R¹⁰ group or a five-, six- or seven-membered nitrogen-containing heterocycle, in which R⁶ to R¹⁰ are alkyl groups of 1 to 6 carbon atoms, and n is a number from 1 to 4.

3. A quinacridone having selectively adjusted triboelectric effects as claimed in claim 1, wherein Q, in the triboelectrically active compound of the formula (I), is a quinacridone radical which is unsubstituted, A is the grouping -CH₂-NH-CO-CH₂- and Y is the group -NR¹¹R¹², in which R¹¹ and R¹² are alkyl groups of 1 to 6 carbon atoms, and n is a number from 1 to 4.

4. A quinacridone having selectively adjusted triboelectric effects as claimed in claim 1, wherein Q, in the triboelectrically active compound of the formula (I), is a quinacridone radical which is unsubstituted or substituted by alkyl(C₁-C₆) groups or chlorine atoms, A is the group -CH₂-, Y is a five-, six- or seven-membered nitrogen-containing heterocycle, and n is a number from 1 to 4.

5. A quinacridone having selectively adjusted triboelectric effects as claimed in at least one of claims 1 and 2, wherein the pigment to which the triboelectrically active compound is added is a quinacridone pigment based on C.I. Pigment Red 122, C.I. Pigment Red 209 or C.I. Pigment Violet 19 or is a quinacridone mixed crystal.

6. A quinacridone pigment having selectively adjusted triboelectric effects, which contains from 0.05 to 30 % by weight of a triboelectrically active compound of the formula (I) as specified in one or more of claims 1 to 5.

7. A quinacridone pigment having selectively adjusted triboelectric effects, wherein the pigment to which a triboelectrically active compound as claimed in claim 1 is added is a quinacridone mixed crystal comprising 95 to 60 parts of the quinacridone of the formula A below and 5 to 40 parts of the quinacridone of formula B below

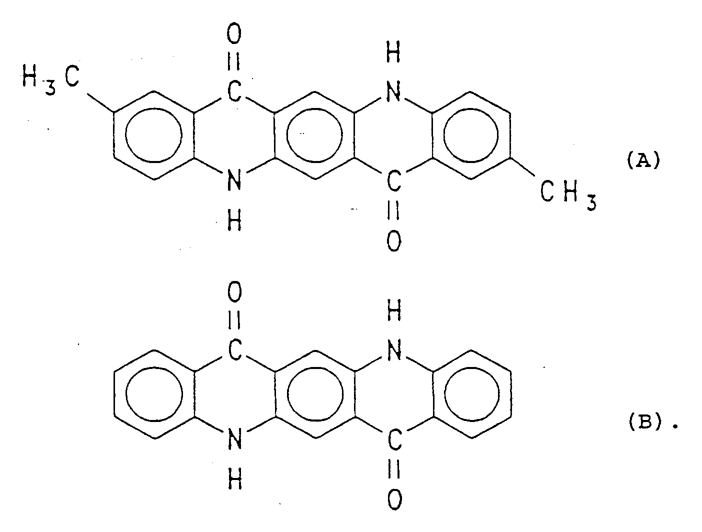

8. A process for the preparation of a quinacridone pigment having selectively adjusted triboelectric effects as claimed in claim 6 or 7, wherein the triboelectrically active compound is added to the pigment press-cake or pigment powder in any desired step of the pigment synthesis or in the pigment aftertreatment.

9. Use of a quinacridone pigment for the preparation of triboelectrically selectively adjusted toners or developers which are used for electrophotographic copying or reproduction of originals and for printing electronically, optically or magnetically stored information or are used in colorproofing, wherein the quinacridone pigment contains from 0.05 to 30 % by weight of triboelectrically active compounds of the formula I
Q ⁅ A - Y]ₙ (I),
individually or in combination, in which Q in formula (I) is a quinacridone radical which is unsubstituted or substituted by halogen atoms, alkyl(C₁-C₆), alkoxy(C₁-C₆), H₂N-CO-, alkyl(C₁-C₈)-NH-CO- or 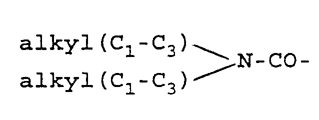 groups, A is a direct bond or a bridge member from the series comprising -O-, -S-, -NR¹-, -CO-, -SO₂-, -CR²R³-, arylene or chemically reasonable combinations of these bridge members, and Y is an -NR⁴R⁵ group or a five-, six-or seven-membered heterocycle which contains one to three heteroatoms from the series comprising nitrogen and/or oxygen and/or sulfur and which can be substituted by alkyl(C₁-C₄), alkoxy(C₁-C₆), hydroxyphenyl, halogen atoms, -CN, -COOH, -CO-NRR', -SO₂-NRR', hydroxyalkyl or alkylaminoalkyl, in which R and R' together with the nitrogen atom can be an aliphatic or aromatic heterocycle, R and R' are hydrogen atoms or alkyl(C₁-C₄) groups and R¹ to R⁵, independently of one another, are each a hydrogen atom and/or an alkyl or alkenyl group of 1 to 22 carbon atoms and n is a number from 1 to 4.

10. Use as claimed in claim 9, wherein Q, in the triboelectrically active compound of the formula (I), is a quinacridone radical which is unsubstituted or substituted by alkyl(C₁-C₆) groups or chlorine atoms, A is -CH₂-, -NR⁶-, -SO₂-, -CO-, -CR⁷R⁸ or chemically reasonable combinations, Y is an -NR⁹R¹⁰ group or a five-, six- or seven-membered nitrogen-containing heterocycle, in which R⁶ to R¹⁰ are alkyl groups of 1 to 6 carbon atoms, and n is a number from 1 to 4.

11. Use as claimed in claim 9, wherein Q, in the triboelectrically active compound of the formula (I), is a quinacridone radical which is unsubstituted, A is the grouping -CH₂-NH-CO-CH₂- and Y is the group -NR¹¹R¹², in which R¹¹ and R¹² are alkyl groups of 1 to 6 carbon atoms, and n is a number from 1 to 4.

12. Use as claimed in claim 9, wherein Q, in the triboelectrically active compound of the formula (I), is a quinacridone radical which is unsubstituted or substituted by alkyl(C₁-C₆) groups or chlorine atoms, A is a grouping of the formula -SO₂-NH-(CH₂)ₓ- or -CO-NH-(CH₂)ₓ-, in which x is a number from 1 to 22, and Y is the group -NR¹³R¹⁴, in which R¹³ and R¹⁴ are alkyl groups of 1 to 6 carbon atoms, and n is a number from 1 to 4.

13. Use as claimed in claim 9, wherein Q, in the triboelectrically active compound of the formula (I), is a quinacridone radical which is unsubstituted or substituted by alkyl(C₁-C₆) groups or chlorine atoms, A is the group -CH₂-, Y is a five-, six- or seven-membered nitrogen-containing heterocycle, and n is a number from 1 to 4.

14. Use as claimed in claim 9, wherein a triboelectrically active compound of the formula 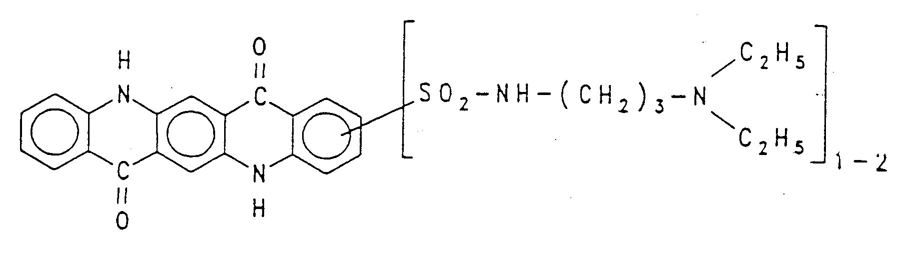 is present.

15. Use as claimed in claim 9, wherein a triboelectrically active compound of the formula 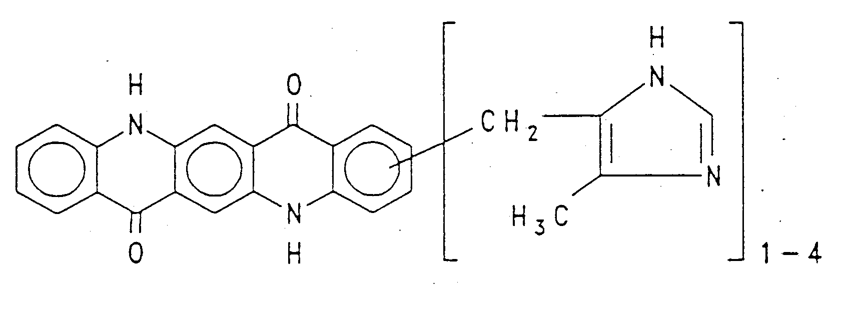 is present.

16. Use of toners or developers which have been prepared using a quinacridone pigment having selectively adjusted triboelectric effects as claimed in one or more of claims 9 to 15 for reproducing magenta in electrophotographic multi-color recording.

17. Use of a triboelectrically active compound of the general formula (I) specified in one or more of claims 9 to 15 as color- and charge-controlling agent, alone or in combination with pigments, preferably quinacridone pigments, in electrophotographic toners and developers.

## Revendications

1. Quinacridones ayant des effets triboélectriques sélectivement déterminés, caractérisées par une teneur d'environ 0,05 % à 100 % en poids en composés triboélectriquement actifs de formule générale (I)
Q-[A-Y]ₙ (I)
individuellement ou en combinaison, dans la formule (I) Q représentant un radical quinacridone non substitué ou substitué par des atomes d'halogènes, les groupes alkyle en (C₁-C₆), alcoxy en (C₁-C₆), H₂N-CO-, alkyle en (C₁-C₈)-NH-CO- ou 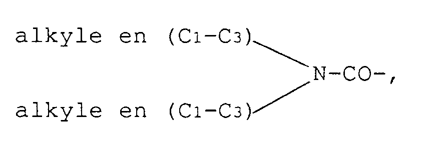 A représentant une liaison directe ou un élément de pont de la série des -O-, -S-, -NR¹-, -CO-, -SO₂-, -CR²R³-, arylène, ou des combinaisons chimiquement significatives de ces éléments de pont, et Y un groupe -NR⁴R⁵- ou un hétérocycle à 5, 6 ou 7 chaînons, qui contient 1 à 3 hétéroatomes de la série de l'azote et/ou de l'oxygène et/ou du soufre et qui peut être substitué par des alkyle en (C₁-C₄), alcoxy en (C₁-C₆), hydroxyphényle, atomes halogènes, -CN, -COOH, -CO-NRR', -SO₂-NRR', hydroxyalkyle ou alkylaminoalkyle, R et R' ensemble avec l'atome d'azote pouvant représenter un hétérocycle aliphatique ou aromatique, R et R' représentant des atomes d'hydrogène ou des groupes alkyle en (C₁-C₄) et R¹ à R⁵, indépendamment l'un de l'autre, chacun représentant un atome d'hydrogène et/ou un groupe alkyle ou alcènyle comportant de 1 à 22 atomes de carbone, et n représentant le nombre de 1 à 4, de tels composés de formule (I) étant exclus dans lesquels
a) A représente un groupe -CO- et Y un groupe -NR⁴R⁵ ou
b) A représente un groupe de formule -SO₂-NR¹-(CH₂)_{z}-ou -CO-NR¹-(CH₂)_{z}, z représentant un nombre entier de 1 à 6, ou
c) A représente un groupe -CH₂- et Y un radical imidazolyle substitué ou non substitué.

2. Quinacridones ayant des effets triboélectriques sélectivement déterminés selon la revendication 1, caractérisées en ce que dans le composé triboélectriquement actif de formule générale (I) Q représente un radical quinacridone non substitué ou substitué par des groupes alkyle en (C₁-C₆) ou atomes de chlore, A signifie -CH₂-, -NR⁶-, -SO₂-, -CO-, -CR⁷R⁸ ou des combinaisons chimiquement significatives, Y représente un groupe -NR⁹R¹⁰ ou un hétérocycle azoté à 5, 6 ou 7 chaînons, R⁶ à R¹⁰ signifiant des groupes alkyle comportant de 1 à 6 atomes de carbone et n représentant un nombre de 1 à 4.

3. Quinacridones ayant des effets triboélectriques sélectivement déterminés selon la revendication 1, caractérisées en ce que dans le composé triboélectriquement actif de formule générale (I) Q représente un radical quinacridone non substitué, A signifie les groupements -CH₂-NH-CO-CH₂- et Y représente le groupe -NR¹¹R¹², R¹¹ et R¹² représentant des groupes alkyle comportant de 1 à 6 atomes de carbone et n représentant un nombre de 1 à 4.

4. Quinacridones ayant des effets triboélectriques sélectivement déterminés selon la revendication 1, caractérisées en ce que dans le composé triboélectriquement actif de formule générale (I) Q représente un radical quinacridone non substitué ou substitué par des groupes alkyle en (C₁-C₆) ou atomes de chlore, A signifie le groupe -CH₂-, Y représente un hétérocycle azoté à 5, 6 ou 7 chaînons et n signifie un nombre de 1 à 4.

5. Quinacridones ayant des effets triboélectriques sélectivement déterminés selon au moins l'une des revendications 1 et 2, caractérisées en ce que le pigment, auquel on ajoute le composé triboélectriquement actif, est un pigment de quinacridone à base de C.I. Pigment rouge 122, de C.I. Pigment rouge 209 ou de C.I. Pigment violet 19 ou une solution solide de quinacridone.

6. Pigments de quinacridone ayant des effets triboélectriques sélectivement déterminés, caractérisés par une teneur de 0,05 à 30 % en poids des composés triboélectriquement actifs de formule générale (I) citée dans une ou plusieurs des revendications 1 à 5.

7. Pigments de quinacridone ayant des effets triboélectriques sélectivement déterminés, caractérisés en ce que le pigment auquel on ajoute le composé triboélectrique selon la revendication 1, est une solution solide de quinacridone composée de 95 à 60 parties de la quinacridone de formule (A) ci-après et de 5 à 40 partie de la quinacridone de formule (B) ci-après

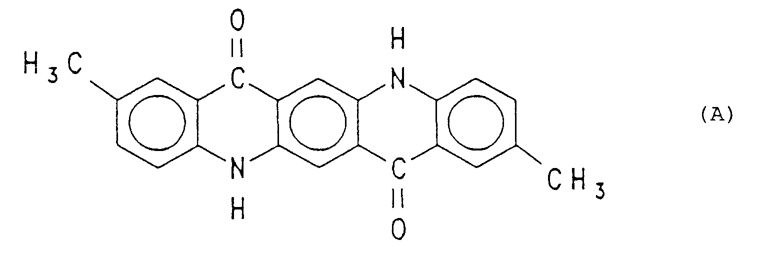

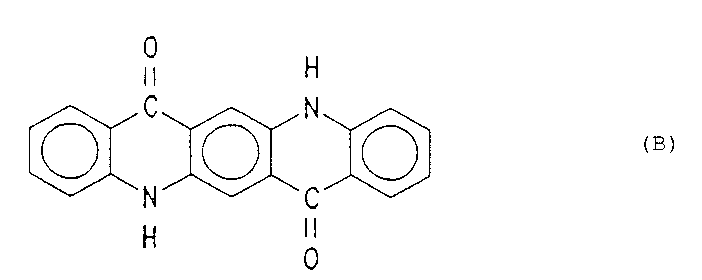

8. Procédé pour la préparation des pigments de quinacridone ayant des effets triboélectriques sélectivement déterminés selon la revendication 6 ou 7, caractérisé en ce qu'on ajoute le composé triboélectriquement actif dans n'importe quelle étape de la synthèse du pigment ou au cours du post-traitement du pigment au gâteau comprimé de pigment ou au pigment pulvérulent.

9. Utilisation de pigments de quinacridone pour la préparation de révélateurs ou de toners à effet triboélectrique sélectivement déterminé, que l'on utilise pour la copie ou pour la polycopie électrophotographique de modèles ainsi que pour l'impression d'informations saisies par voie électronique, optique ou magnétique ou dans le "Colorproofing", caractérisée en ce que les pigments de quinacridone ont une teneur de 0,05 à 30 % en poids en composés triboélectriquement actifs de formule générale I
Q-[A-Y]ₙ (I),
individuellement ou en combinaison, dans la formule (I) Q représentant un radical quinacridone non substitué ou substitué par des atomes d'halogènes, les groupes alkyle en (C₁-C₆), alcoxy en (C₁-C₆), H₂N-CO-, alkyle en (C₁-C₈)-NH-CO-
ou 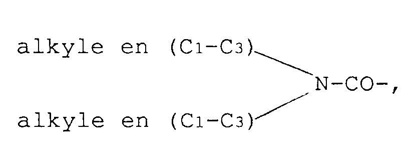 A représentant une liaison directe ou un élément de pont de la série des -O-, -S-, -NR¹-, -CO-, -SO₂-, -CR²R³-, arylène, ou des combinaisons chimiquement significatives de ces éléments de pont, et Y un groupe -NR⁴R⁵- ou un hétérocycle à 5, 6 ou 7 chaînons, qui contient 1 à 3 hétéroatomes de la série de l'azote et/ou de l'oxygène et/ou du soufre et qui peut être substitué par des alkyle en (C₁-C₄), alcoxy en (C₁-C₆), hydroxyphényle, atomes d'halogènes, -CN, -COOH, -CO-NRR', -SO₂-NRR', hydroxyalkyle ou alkylaminoalkyle, R et R' ensemble avec l'atome d'azote pouvant représenter un hétérocycle aliphatique ou aromatique, R et R' représentant des atomes d'hydrogène ou des groupes alkyle en (C₁-C₄) et R¹ à R⁵, indépendamment l'un de l'autre, chacun représentant un atome d'hydrogène et/ou un groupe alkyle ou alcényle comportant de 1 à 22 atomes de carbone, et n représentant le nombre de 1 à 4.

10. Utilisation selon la revendication 9, caractérisée en ce que dans le composé triboélectriquement actif de formule générale (I) Q représente un radical quinacridone non substitué ou substitué par des groupes alkyle en (C₁-C₆) ou atomes de chlore, A signifie -CH₂-, -NR⁶-, -SO₂-, -CO-, -CR⁷R⁸ ou des combinaisons chimiquement significatives, Y représente un groupe - NR⁹R¹⁰ ou un hétérocycle azoté à 5, 6 ou 7 chaînons, R⁶ à R¹⁰ signifiant des groupes alkyle comportant de 1 à 6 atomes de carbone et n représentant un nombre de 1 à 4.

11. Procédé selon la revendication 9, caractérisé en ce que dans le composé triboélectriquement actif de formule générale (I) Q représente un radical quinacridone non substitué, A signifie les groupements - CH₂-NH-CO-CH₂- et Y représente le groupe -NR¹¹R¹², R¹¹ et R¹² représentant des groupes alkyle comportant de 1 à 6 atomes de carbone et n représentant un nombre de 1 à 4.

12. Utilisation selon la revendication 9, caractérisée en ce que le composé triboélectriquement actif de formule générale (I) représente un radical quinacridone non substitué ou substitué par des groupes alkyle en (C₁-C₆) ou atomes de chlore, A représente un groupement de formule -SO₂-NH-(CH₂)ₓ- ou -CO-NH-(CH₂)ₓ, où x vaut de 1 à 22, et Y signifie le groupe -NR¹³R¹⁴, R¹³ et R¹⁴ représentant des groupes alkyle comportant de 1 à 6 atomes de carbone et n signifiant un nombre de 1 à 4.

13. Utilisation selon la revendication 9, caractérisée en ce que dans le composé triboélectriquement actif de formule générale (I) Q représente un radical quinacridone non substitué ou substitué par des groupes alkyle en (C₁-C₆) ou atomes de chlore, A représente le groupe -CH₂-, Y représente un hétérocycle azoté à 5, 6 ou 7 chaînons et n signifie un nombre de 1 à 4.

14. Utilisation selon la revendication 9, caractérisée en ce qu'il est contenu un composé triboélectriquement actif de formule

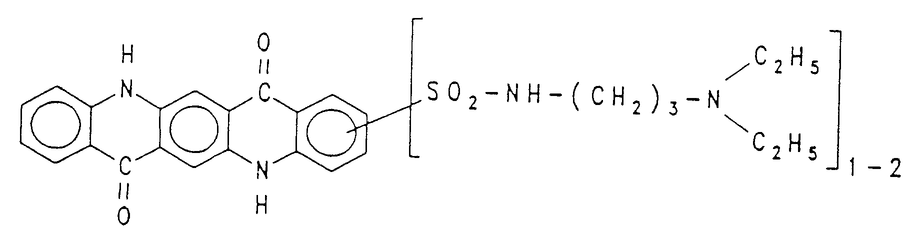

15. Utilisation selon la revendication 9, caractérisée en ce qu'il est contenu un composé triboélectriquement actif de formule

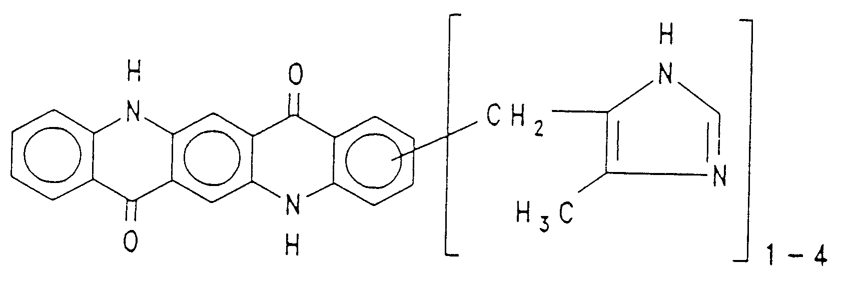

16. Utilisation de toners ou de révélateurs que l'on prépare en utilisant des pigments de quinacridone ayant des effets triboélectriques sélectivement déterminés, cités dans une ou plusieurs des revendications 9 à 15, pour le rendu de couleur magenta dans l'enregistrement électrophotographique d'images polychromes.

17. Utilisation de composés triboélectriquement actifs cités dans une ou plusieurs des revendications 9 à 15 en tant qu'agents de contrôle de couleur et de charge seuls ou en combinaison avec des pigments, de préférence des pigments de quinacridone, dans des toners et révélateurs électrophotographiques.
